# NEUE EUROPÄISCHE PATENTSCHRIFT

(11) **EP 0 555 241 B2**
(45) Veröffentlichungstag und Bekanntmachung des Hinweises auf die Entscheidung über den Einspruch: **10.06.1998**
(45) Hinweis auf die Patenterteilung: 13.09.1995
(21) Anmeldenummer: 91917955.6
(22) Anmeldetag: 19.10.1991
(51) Int. Cl.: B29C 45/17

(54) **VERFAHREN ZUM SPRITZGIESSEN VON TEILEN AUS THERMOPLASTISCHEM KUNSTSTOFF**
PROCESS FOR INJECTION MOULDING PARTS MADE OF SYNTHETIC THERMOPLASTIC MATERIALS
PROCEDE DE MOULAGE PAR INJECTION DE PIECES EN MATIERE THERMOPLASTIQUE

(30) Priorität: 31.10.1990 DE 4034663
(43) Veröffentlichungstag der Anmeldung: 18.08.1993
(73) Patentinhaber: Franz Delbrouck GmbH, D-58710 Menden (DE)
(72) Erfinder: DELBROUCK, Klaus, D-5000 Köln 30 (DE)
(74) Vertreter: Köchling, Conrad, Dipl.-Ing.
(86) Internationale Anmeldenummer: DE9100827
(87) Internationale Veröffentlichungsnummer: WO9207697

(56) Entgegenhaltungen:
- EP-A- 289 230
- EP-A- 0 127 961
- EP-A- 0 250 080
- EP-A- 0 374 123
- DE-A- 3 940 186
- FR-A- 2 256 021
- JP-A- 1 168 425
- NL-A- 8 903 105
- US-A- 4 101 617

## Beschreibung

Die Erfindung betrifft ein Verfahren zum Spritzgießen von Teilen aus thermoplastischem Kunststoff, wobei in eine aus mindestens zwei Formhälften bestehende, geschlossene Gießform flüssiger Thermoplast unter hohem Druck formfüllend eingespritzt wird und während der Erstarrungsphase schmelzflüssiger Thermoplast zum Ausgleich der erstarrungsbedingten Schwindung nachgespeist wird (Nachdruckphase).

Aus der NL-A-89 03 105 ist ein Verfahren zur Herstellung von Kunststoffbehältern durch Spritzgießen bekannt, wobei während der Nachdruckphase eine Verschiebung des Kolbenbodens, der ein Teil des Wandungsbereiches bildet, stattfindet und gleichzeitig Gas unter hohem Druck eingepreßt wird.

Die Erfindung verfolgt das Ziel, ein Verfahren gattungsgemäßer Art zu schaffen, mit dem es besonders einfach und mit einfachem konstruktivem Aufwand möglich ist, Kunststoffteile mit geschlossenen innenliegenden Höhlungen auszubilden. Beispielsweise sollen durch das Verfahren Flaschenkästen mit allseitig geschlossenen, hohlen Traggriffen und dergleichen Gebrauchsgegenstände geschaffen werden können. Auch soll mit dem erfindungsgemäßen Verfahren eine kostengünstige und gewichtssparende Ausbildung von Hohlstegen ermöglicht werden, die Bestandteil anderer Gegenstände sind.

Im Stand der Technik ist als Variante des Spritzgießens das sogenannte Gasinnendruckverfahren bekannt, wobei diesem Verfahren die grundsätzliche Idee zugrundeliegt, den verfahrensbedingten Schwindungsprozeß des Formte es ohne Nachdruck zu kompensieren. Hierzu wird bei diesem Verfahren ein inertes Gas in die Schmelze zur gezielten Bildung von Hohlräumen eingeleitet. Hierdurch wird neben einer Gewichtsersparnis noch eine hohe Steifigkeit durch die gezielte Hohlkammerausbildung gewährleistet. Auch wird durch die Vermeidung von Anhäufungen von Thermoplastmaterial die Abkühlungszeit verringert, so daß die Gesamtzykluszeiten reduziert werden können. Verfahrensmäßig läuft dieses Verfahren so ab, daß bei der Einleitung des Gases durch die Speisedüse des Thermoplastmaterials das Gas über das Angußsystem in die gewünschten Kavitätsräume gelangt, wobei das Schmelzevolumen dabei so gewählt werden muß, daß nur eine Teilfüllung der Form erzielt wird. Das Massepolster wird demzufolge bis zum Fließwegende verdrängt und an die Wandungen der Form gepreßt, wobei dort eine schnelle Abkühlung der relativ geringen Wandstärken erreicht wird. Nachteilig bei diesem Verfahren ist, daß bestimmte Störgrößen, die die Reproduzierbarkeit der Hohlraumbildung beeinträchtigen können, nicht grundsätzlich ausgeschlossen werden können. Dies gilt insbesondere für Werkzeuge mit Mehrfachkavitäten. Schwierigkeiten treten insbesondere auch bei der Beurteilung von Gleichmäßigkeiten der Hohlräume vorallem in undurchsichtigen Formteilen auf.

Zur Lösung der eingangs gestellten Aufgabe geht die Erfindung einen anderen Weg. Die Erfindung schlägt dazu ein Verfahren zum Spritzgießen von Teilen aus thermoplastischem Kunststoff, wobei in eine aus mindestens zwei Formhälften bestehende, geschlossene Gießform flüssiger Thermoplast unter hohem Druck formfüllend eingespritzt wird und während der Erstarrungsphase schmelzflüssiger Thermoplast zum Ausgleich der erstarrungsbedingten Schwindung nachgespeist wird (Nachdruckphase), wobei zur Formung einer Höhlung in einem Bereich des Kunststoffteiles die diesen Bereich umgebende Gießform durch Verschiebung eines Wandungsbereiches der Gießform während der Nachdruckphase vergrößert wird, in das dort befindliche, mindestens im Kern noch schmelzflüssige bzw. teigige Thermoplastmaterial Gas unter hohem Druck noch während der Nachdruckphase eingepreßt wird, so daß die dem verschobenen Wandungsbereich benachbarte, schon erstarrte Haut des Thermoplastmaterials dem verschobenen Wandungsbereich folgend, an diesen unter gleichzeitiger Bildung eines Hohlraumes angepreßt wird und die noch flüssige bzw. teigige Kernmasse dieses Bereiches die Trennfugen zwischen dem geformten Kunststoffteil in diesem Bereich und dem zu dem verschobenen Wandungsbereich verschobenen Thermoplastteilbereich materialschlüssig verbindet, wobei der verschobene Wandungsbereich durch die in seiner Einschubrichtung vorn liegenden Stirnfläche eines verschiebbaren Formkernes gebildet wird, wobei bei eingeschobenem Formkern ein topfartiges Stegteil geformt wird, von dessen Boden nach dem Zurückziehen des Formkernes und nach dem Zuführen des Druckgases in den noch flüssigen oder teigigen Kern des Bodens eine zum Boden und zur Stirnfläche des Formkernes parallele Schicht abgehoben wird, die mit ihrer schon erstarrten Außenfläche gegen die Stirnfläche des Formkernes gepreßt wird, wobei die Trennfugen zwischen den Seitenwandungen des Stegteils und der abgehobenen Schicht durch die Restschmelze der zwischen Boden und abgehobener Schicht verbleibenden Thermoplastmasse abgedichtet wird, die mittels des Druckgases an die Wandungen der so gebildeten Höhlung gepreßt wird.

Als Druckgas kommt vorzugsweise inertes Gas in Betracht.
Durch diese Verfahrensweise ist es möglich, Hohlstege oder dergleichen ähnliche allseitig geschlossene hohle Räume in Kunststofformteilen zu bilden, indem kurz vor dem Erstarren des Thermoplastmaterials ein Wandungsbereich, beispielsweise ein Formkern um einen bestimmten Weg aus der Form herausgezogen wird, um so ein Formnest zur Bildung einer Höhlung zur Verfügung zu stellen. Durch das Aufbringen von Gasdruck in den noch flüssigen oder teigigen Bereich des in dem entsprechenden Formteil befindlichen Thermoplastmaterials wird erreicht, daß die schon erstarrten Bereiche dieser Thermoplastmasse an die Außenflächen des Formhohlraumes gepreßt werden und im Inneren ein Hohlraum gebildet wird.

Vorzugsweise soll dabei die Stegdicke im dem Hohlraum benachbarten Bereich möglichst gleich über Länge und Höhe sein, wozu durch den Kern eine definierte Wandstärke erhalten wird, um bestimmte Kräfte statisch aufnehmen zu können. Diese Fertigungsweise ist insbesondere für Hohlgriffe von Flaschenkästen und dergleichen geeignet.

Weitere vorteilhafte Merkmale sind in den Unteransprüchen bezeichnet.

Grundsätzlich läuft das Verfahren so ab, daß in der Nachdruckphase, in der noch Kunststoff eingespeist wird, um den Materialschrumpf auszugleichen, der Formkern gezogen wird, um das vorher bestimmte Maß, anschließend Druckgas in den noch flüssigen oder teigigen Bereich der Thermoplastmasse der so geformten Höhlung eingespeist wird, wobei die entsprechende Gaszuführungsdüse bis in die Höhlung geführt ist und als Bohrung im Werkzeug bzw. im Werkzeugschwert ausgebildet ist. Während des begrenzten Herausziehens des Formkernes kann sich der Gasdruck aufbauen. Parallel zu dieser Phase läuft die Nachdruckphase des Spritzvorganges ab. Brauchbar zur Anwendung des erfindungsgemäßen Verfahrens sind alle spritzfähigen Thermoplaste. Die Gesamtzeit von Nachdruckphase und Druckaufgabephase des Druckgases darf nicht zu lang gewählt sein, da ansonsten das aus dem Thermoplast geformte Teil nicht mehr entformt werden könnte. Insgesamt muß die zeitliche Abfolge von Nachdruck und Druckaufgabe des Druckgases innerhalb einer für das Produkt zulässigen Gesamtzeit liegen, damit die Entformung gewährleistet ist.

Die Erfindung ist nachstehend anhand von Prinzipzeichnungen erläutert.

Es zeigt:
- Fig. 1: das Werkzeug zur Formung eines Hohlsteges in der Ausgangslage, bei gefüllter Form;

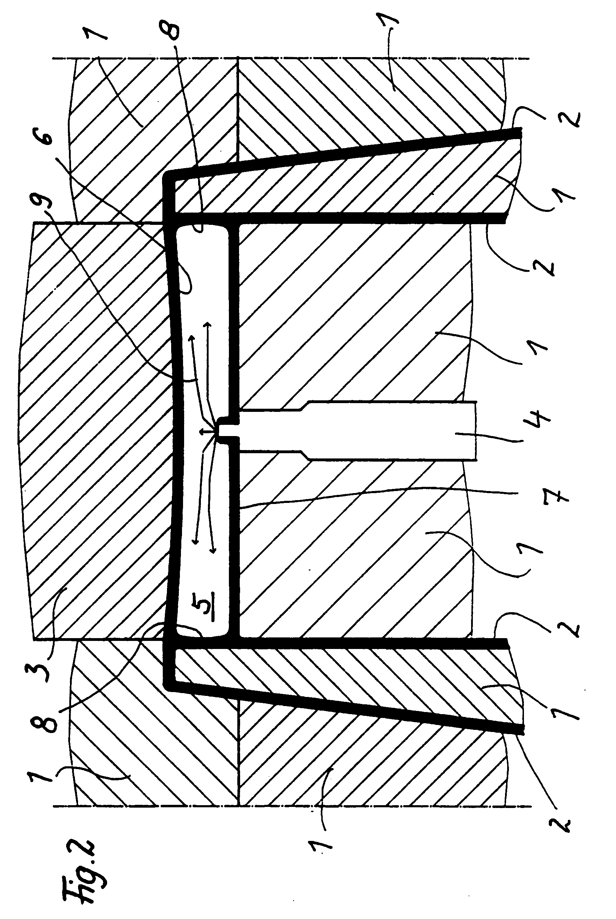

- Fig. 2: die Form bei gezogenem Werkzeugkern und gleichzeitig erfolgender Begasung;
- Fig. 3: das Ausführungsbeispiel gemäß Fig. 2 im Querschnitt etwa in Höhe der Begasungsdüse gesehen.

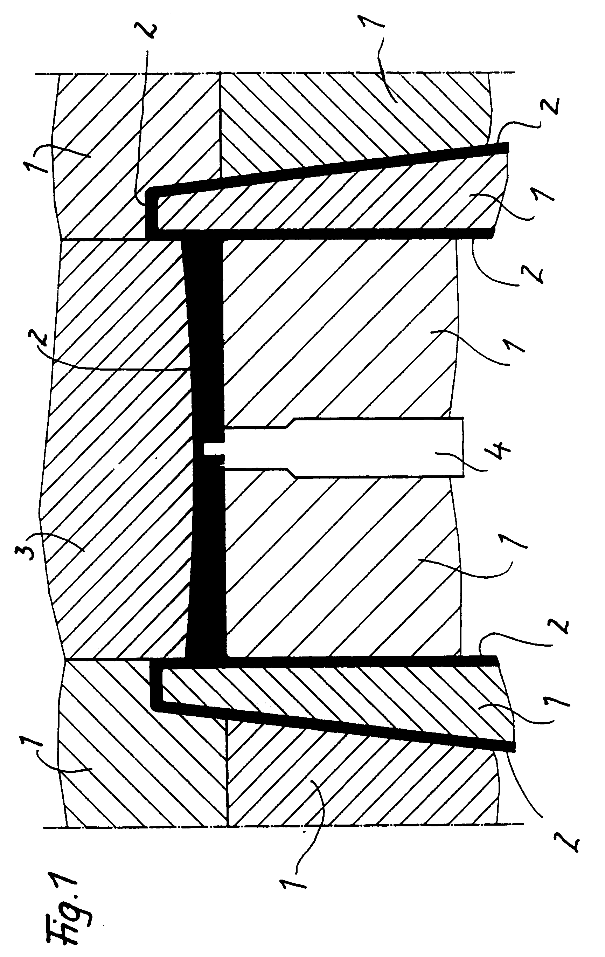

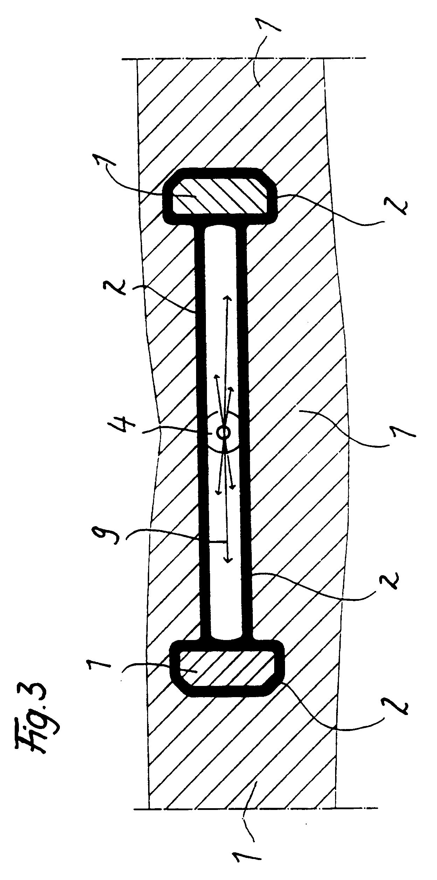

In Figur 1 ist in schraffierten Linienzügen die Gießform 1 gezeigt, die aus mehreren Elementen zusammengesetzt ist. In durchgezogenen dicken schwarzen Linien ist das noch flüssige Thermoplastmaterial 2 dargestellt, welches in die Form eingespritzt worden ist. Der Werkzeugkern 3 ist in der Zeichnung oben gezeigt. Der Werkzeugkern 3 weist mit seiner in der Zeichnung unteren Stirnrandkante einen relativ großen Abstand von den darunter befindlichen Formteilen 1 auf, so daß eine Thermoplastanhäufung stattfindet. Die Begasungsdüse für die Zuführung des Druckgases ist mit 4 bezeichnet. Noch während der Nachdruckphase wird der Werkzeugkern um ein solches Maß zurückgezogen, so daß die Stirnfläche des Werkzeugkernes etwa in Flucht mit der Stirnfläche der seitlich neben dem Kern befindlichen Bestandteile des Thermoplastkörpers liegt. Durch die Begasungsdüse 4 wird in die noch teigige oder flüssige Masse im Bereich 5 Druckgas, Inertgas eingespeist, wodurch das Material, wie es in Figur 1 ersichtlich ist, aufgetrennt wird und ein Teilbereich 6 in der Zeichnung nach relativ oben gegen die Stirnfläche des Werkzeugkernes 3 gepreßt werden, während der Bereich 7 in der Zeichnung unten an Werkzeugteilen haften bleibt. Im seitlichen Bereich (Bezugszeichen 8) ist ebenso, wie im unteren Bereich 7 schon eine Erstarrung des an der Gießform anliegenden Bereiches des Thermoplastes erfolgt, so daß dieser Bereich in sich stabil ist und durch Druckgas nicht weggedrängt werden kann. Jedoch ist das in dem Bereich 5 befindliche teigige oder flüssige Thermoplastmaterial allseitig an die Außenwandungen des gebildeten Hohlraumes im Bereich 5 gepreßt, so daß der Bereich 6 mit dem Bereich 7 und dem Bereich 8 innig verbunden ist und einen in sich geschlossenen Hohlraum bildet, der lediglich im Bereich der Begasungsdüse 4 eine kleine Öffnung aufweist. In Figur 3 ist eine Schnittansicht ersichtlich, bei der verdeutlicht ist, daß aus der Begasungsdüse 4 das Druckgas in alle Richtungen 9 (gekennzeichnet durch Pfeile) strömen kann.

## Patentansprüche

1. Verfahren zum Spritzgießen von Teilen aus thermoplastischem Kunststoff, wobei in eine aus mindestens zwei Formhälften bestehende, geschlossene Gießform (1) flüssiger Thermoplast (2) unter hohem Druck formfüllend eingespritzt wird und während der Erstarrungsphase schmelzflüssiger Thermoplast (2) in einer Nachdruckphase zum Ausgleich der erstarrungsbedingten Schwindung nachgespeist wird, wobei zur Formung einer Höhlung (5) in einem Bereich des Kunststoffteiles die diesen Bereich umgebende Gießform (1) durch Verschiebung eines Wandungsbereiches (3) der Gießform während der Nachdruckphase vergrößert wird, in das dort befindliche, mindestens im Kern noch schmelzflüssige bzw. teigige Thermoplastmaterial (2) Gas unter hohem Druck noch während der Nachdruckphase eingepreßt wird, so daß die dem verschobenen Wandungsbereich (3) benachbarte, schon erstarrte Haut (6) des Thermoplastmaterials (2) dem verschobenen Wandungsbereich (3) folgend, an diesen unter gleichzeitiger Bildung eines Hohlraumes (5) angepreßt wird und die noch flüssige bzw. teigige Kernmasse dieses Bereiches die Trennfugen zwischen dem geformten Kunststoffteil (bei 8) in diesem Bereich und dem zu dem verschobenen Wandungsbereich verschobenen Thermoplastteilbereich (9) materialschlüssig verbindet, wobei der verschobene Wandungsbereich (6) durch die in seiner Einschubrichtung vorn liegenden Stirnfläche eines verschiebbaren Formkernes (3) gebildet wird, wobei bei eingeschobenem Formkern ein topfartiges Stegteil geformt wird, von dessen Boden nach dem Zurückziehen des Formkernes (3) und nach dem Zuführen des Druckgases in den noch flüssigen oder teigigen Kern des Bodens eine zum Boden und zur Stirnfläche des Formkernes parallele Schicht abgehoben wird, die mit ihrer schon erstarrten Außenfläche gegen die Stirnfläche des Formkernes (3) gepreßt wird, wobei die Trennfugen zwischen den Seitenwandungen (8) des Stegteils und der abgehobenen Schicht (6) durch die Restschmelze der zwischen Boden und abgehobener Schicht verbleibenden Thermoplastmasse (2) abgedichtet wird, die mittels des Druckgases an die Wandungen der so gebildeten Höhlung gepreßt wird, und wobei das topfartige Stegteil im dem Hohlraum benachbarten Bereich mit einer gleichen Stegdicke über Zänge und Höhe ausgebildet wird, indem durch den Werkzeugkern eine definierte Wandstärke gebildet wird und im seitlichen Bereich 8 sowie im unteren Bereich 7 schon eine Erstarrung des an der Gießform anliegenden Bereiches des Thermoplastes erfolgt, sodaß dieser Bereich in sich stabil ist und durch Druckgas nicht weggechrängt werden kann.

2. Verfahren nach Anspruch 1, **dadurch gekennzeichnet,** daß das Druckgas über eine Bohrung in der Werkzeugform oder der im Werkzeugschwert (Formkern) zur Höhlung geführt wird.

3. Verfahren nach einem der Ansprüche 1 oder 2, **dadurch gekennzeichnet,** daß das Druckgas unter höherem Druck als die thermoplastische Spritzmasse zugeführt wird.

4. Verfahren nach Anspruch 3, **dadurch gekennzeichnet,** daß das Druckgas mit ca. 200 bar und die thermoplastische Spritzmasse mit geringfügig niedrigerem Druck zugeführt wird.

5. Verfahren nach einem der Ansprüche 1 bis 4, **dadurch gekennzeichnet,** daß der Boden der topfartigen Höhlung vor dem Zurückziehen des Formkernes etwa mit doppelter Sollwandstärke gespritzt wird, mittels Druckgaszufuhr etwa die halbe Wandstärke abgehoben und dieses Raumelement gegen die Stirnfläche des zurückgezogenen Formkernes gepreßt wird.

6. Verfahren nach einem der Ansprüche 1 bis 5, **dadurch gekennzeichnet,** daß die zeitliche Dauer der Nachdruckphase einschließlich der Druckaufgabe des Druckgases die für die Entformung des thermoplastischen Produktes zulässige Zeit nicht überschreitet.

7. Verfahren nach einem der Ansprüche 1 bis 6, **dadurch gekennzeichnet,** daß das Druckgas über einen von der Thermoplastzufuhr getrennten Kanal zugeführt wird.

## Claims

1. A process for injection moulding parts made from synthetic thermoplastic material, whereby liquid synthetic thermoplastic material (2) is injected under high pressure into a closed hollow mould (1) consisting of at least two mould halves to fill said mould, and during the solidification phase molten synthetic thermoplastic material (2) is subsequently supplied in an afterpressure phase to compensate for the shrinkage caused by solidification, whereby to mould a cavity (5) in a region of the plastic part, the hollow mould (1) surrounding this region is enlarged by displacing a wall region (3) of the hollow mould during the afterpressure phase, gas is injected at high pressure still during the afterpressure phase into the synthetic thermoplastic material located there, which is still molten or doughy at least in the core, so that the already solidified skin (6), adjacent to the displaced wall region (3), of the synthetic thermoplastic material following the displaced wall region (3) is pressed against said region with the simultaneous formation of a cavity (5) and the still liquid or doughy core compound of this region connects the separation joints between the moulded plastic part (at 8) in this region and the thermoplastic sub-region (9) displaced in relation to the displaced wall region in material-locking manner, whereby the displaced wall region (6) is formed by the end face of a displaceable mould core (3) lying forwards in its insertion direction, whereby, with the mould core displaced, a pot-like web part is moulded, from the base of which, after the withdrawal of the mould core (3) and after the supply of the compressed gas into the still fluid or doughy core of the base, a layer parallel to the base and to the end face of the mould core is raised up, which is pressed with its already solidified outer face against the end face of the mould core (3), whereby the separation joint between the side walls (8) of the web part and the raised layer (6) is sealed by the residual molten mass of the thermoplastic compound (2) remaining between the base and raised layer, which is pressed by means of the compressed gas against the walls of the cavity formed in this manner, and whereby the pot-like web part is formed in the region adjacent to the cavity with consistent web thickness along its length and height, the tool core forming a defined wall thickness and there already being, in the side region 8 and in the lower region 7, a solidification of the thermoplastic material against the hollow mould, so that this region is intrinsically stable and cannot be forced away by the compressed gas.

2. A process according to Claim 1,
**characterised in that** the compressed gas is guided via a bore in the tool mould or tool strut (mould core) to the cavity.

3. A process according to one of Claims 1 or 2,
**characterised in that** the compressed gas is supplied at a higher pressure than the thermoplastic injection compound.

4. A process according to Claim 3,
**characterised in that** the compressed gas is supplied at roughly 200 bar and the thermoplastic injection compound is supplied at a slightly lower pressure.

5. A process according to one of Claims 1 to 4,
**characterised in that** before the withdrawal of the mould core the base of the pot-like cavity is injected roughly with double set wall thickness, roughly half the wall thickness is removed by means of the supply of compressed gas and this space element is pressed against the end face of the withdrawn mould core.

6. A process according to one of Claims 1 to 5,
**characterised in that** the length of time of the afterpressure phase including the pressurisation of the compressed gas does not exceed the period of time permitted for unmoulding the thermoplastic product.

7. A process according to one of Claims 1 to 6,
**characterised in that** the compressed gas is supplied via a duct separate from the supply of synthetic thermoplastic material.

## Revendications

1. Procédé pour mouler par injection des pièces en matière thermoplastique, dans lequel on injecte de la matière thermoplastique liquide (2), sous une pression élevée et en remplissant le moule, dans un moule fermé (1) qui se compose d'au moins deux moitiés de moule et, pendant la phase de solidification, on continue à amener de la matière thermoplastique fondue (2) lors d'une phase de maintien en pression en vue de compenser le retrait qui est causé par la solidification, dans lequel, en vue de former une cavité (5) dans une région de la pièce en matière plastique, on agrandit le moule (1) qui entoure cette région en déplaçant une région (3) de la paroi du moule pendant la phase de maintien en pression, et, pendant que l'on est encore dans la phase de maintien en pression, on injecte du gaz sous haute pression dans la matière thermoplastique (2) qui se trouve à cet endroit et qui est encore fondue ou pâteuse, respectivement, du moins dans le noyau, de sorte que la peau (6) de la matière thermoplastique (2) qui est contiguë à la région déplacée (3) de la paroi et qui s'est déjà solidifiée est serrée contre la région déplacée (3) de la paroi en suivant celle-ci, une cavité (5) étant formée simultanément, et que la masse du centre de cette région qui est encore liquide ou pâteuse, respectivement, relie par conjugaison de la matière les joints de séparation entre la pièce en matière plastique moulée dans cette région (en 8) et la région partielle (6) de la matière thermoplastique qui est refoulée vers la région de la paroi que l'on a déplacée, dans lequel la région (6) de la paroi que l'on a déplacée est formée par la surface frontale d'un noyau de moule (3) qui peut être déplacé, surface qui est située à l'avant dans sa direction d'enfoncement, dans lequel, le noyau de mou le étant enfoncé, il se forme une partie pleine en forme de pot depuis le fond de laquelle une couche parallèle au fond et à la surface frontale du noyau de moule est soulevée après que le noyau de moule (3) a été soulevé et après que le gaz sous pression a été amené dans le noyau du fond qui est encore liquide ou pâteux, couche qui est serrée par sa surface extérieure déjà refroidie contre la surface frontale du noyau de moule (3), et dans lequel les joints de séparation entre les parois latérales (8) de la partie pleine et de la couche soulevée (6) sont rendus étanches par la masse fondue restante de la masse thermoplastique (2) qui demeure entre le fond et la couche soulevée et qui est serrée au moyen du gaz sous pression contre les parois de la cavité ainsi formée,
et où la partie pleine en forme de pot est réalisée, dans l'espace creux de la zone voisine, avec une épaisseur de partie plein identique sur la longueur et la hauteur, par le fait que l'on constitue au moyen du noyau de moule une épaisseur de paroi définie et que, dans la zone latérale 8, ainsi que dans la zone inférieure 7, se produit déjà une solidification de la zone de matière thermoplastique appuyant sur le moule, si bien que cette zone est stable en soi et ne peut être refoulée par l'effet du gaz sous pression.

2. Procédé selon la revendication 1, caractérisé par le fait que le gaz sous pression est amené à la cavité par l'intermédiaire d'un perçage ménagé dans l'outil de moulage ou dans la partie mobile de l'outil (noyau de moule).

3. Procédé selon l'une des revendications 1 et 2, caractérisé par le fait que le gaz sous pression est amené sous une pression plus élevée que la masse thermoplastique injectée.

4. Procédé selon la revendication 3, caractérisé par le fait que le gaz sous pression est amené sous une pression de 200 bars environ et que la masse thermoplastique injectée est amenée sous une pression légèrement inférieure.

5. Procédé selon l'une des revendications 1 à 4, caractérisé par le fait que le fond de la cavité en forme de pot est formé par injection avant que l'on ne retire le noyau de moule, à peu près avec une épaisseur de paroi qui est le double de la valeur voulue, qu'il est soulevé à peu près de la moitié de l'épaisseur de la paroi au moyen de l'amenée du gaz sous pression et que cet élément de volume est serré contre la surface frontale du noyau de moule qui est retiré.

6. Procédé selon l'une des revendications 1 à 5, caractérisé par le fait que la durée de la phase de maintien sous pression, y compris l'application de la pression du gaz sous pression, ne dépasse pas la durée qui est autorisée pour la déformation du produit thermoplastique.

7. Procédé selon l'une des revendications 1 à 6, caractérisé par le fait que le gaz sous pression est amené par l'intermédiaire d'un canal qui est séparé de l'amenée de la matière thermoplastique.
